(19) Europäisches Patentamt
European Patent Office
Office européen des brevets

(11) EP 4 603 879 A1

(12) EUROPEAN PATENT APPLICATION
published in accordance with Art. 153(4) EPC

(43) Date of publication:
20.08.2025 Bulletin 2025/34

(21) Application number: 23884188.6

(22) Date of filing: 16.06.2023

(51) International Patent Classification (IPC):
G01W 1/10 (2006.01)    G06N 3/0464 (2023.01)
G06N 3/08 (2023.01)

(52) Cooperative Patent Classification (CPC):
G01W 1/10; G06N 3/0464; G06N 3/08; Y02A 90/10

(86) International application number:
PCT/CN2023/100686

(87) International publication number:
WO 2024/093249 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.10.2022 CN 202211351491

(71) Applicant: Huawei Cloud Computing
Technologies Co., Ltd.
Guiyang, Guizhou 550025 (CN)

(72) Inventors:
• BI, Kaifeng
  Guiyang, Guizhou 550025 (CN)
• XIE, Lingxi
  Guiyang, Guizhou 550025 (CN)
• TIAN, Qi
  Guiyang, Guizhou 550025 (CN)

(74) Representative: Goddar, Heinz J.
Boehmert & Boehmert
Anwaltspartnerschaft mbB
Pettenkoferstrasse 22
80336 München (DE)

(54) WEATHER FORECAST METHOD AND APPARATUS, AND RELATED DEVICE

(57) This application provides a weather forecast method, including: obtaining meteorological data and target time; determining a plurality of first AI models from a model library based on the target time, where different first AI models in the plurality of first AI models are used for forecasting weather at different time intervals; and performing inference based on the obtained meteorological data by using the plurality of first AI models, to obtain a first weather forecast result at the target time, where each of the first AI models is used for performing at least one iterative inference operation. In this way, weather forecast is performed by using the plurality of AI models, and a complex equation solving process does not need to be performed. This not only can effectively reduce computing power consumed for weather forecast, but also can significantly reduce a weather forecast delay. In addition, a small quantity of times of inference is performed by using the plurality of AI models for forecasting the weather at the different time intervals. This not only can effectively reduce an iterative error, but also can reduce resource consumption required for iterative inference. In addition, this application further provides a corresponding apparatus and a related device.

FIG. 3

# Description

This application claims priority to Chinese Patent Application No. 202211351491.5, filed with the China National Intellectual Property Administration on October 31, 2022 and entitled "WEATHER FORECAST METHOD AND APPARATUS, AND RELATED DEVICE", which is incorporated herein by reference in its entirety.

## TECHNICAL FIELD

This application relates to the field of artificial intelligence technologies, and in particular, to a weather forecast method and apparatus, and a related device.

## BACKGROUND

Weather forecast (weather forecast, which may also be referred to as weather prediction) refers to a technology for forecasting a weather state of an atmosphere of the earth (or a place below the atmosphere of the earth) in the future by using a modern scientific means, and plays an important role in reasonable arrangement of work, early warning of bad weather, and the like.

Currently, mainly based on a numerical weather prediction (numerical weather prediction, NWP) technology and based on an actual atmospheric condition, an atmospheric motion state and a weather phenomenon in a future time period is forecast by modeling mathematical and physical processes for the weather condition and by solving complex hydrodynamic and thermodynamic equations. However, in a complex equation solving process, not only high computing power needs to be consumed, but also a forecast delay is high.

## SUMMARY

In view of this, embodiments of this application provide a weather forecast method, to reduce computing power required for weather forecast and reduce a forecast delay. This application further provides a corresponding apparatus, a computing device, a computing device cluster, a computer-readable storage medium, and a computer program product.

According to a first aspect, an embodiment of this application provides a weather forecast method. The method may be performed by a corresponding weather forecast apparatus. Specifically, the weather forecast apparatus obtains meteorological data and target time. The obtained meteorological data may be, for example, meteorological data of a region at a current moment, or may be global meteorological data at the current moment. The target time may be a future moment, a future time period, or the like. Then, the weather forecast apparatus determines a plurality of first AI models from a model library based on the target time, where different first AI models in the plurality of first AI models are used for forecasting weather at different time intervals. Training of the plurality of AI models in the model library may be completed in advance based on sample data. In addition, the different AI models in the model library are respectively used for forecasting weather at different time intervals such as 1 hour, 2 hours, 3 hours, 1 day, and 3 days, and different AI models for forecasting weather at a same time interval have different training algorithms, model structures, iterative inference algorithms, or the like that are used. Therefore, the weather forecast apparatus performs inference based on the obtained meteorological data by using the plurality of first AI models, to obtain a first weather forecast result at the target time, where each of the first AI models is used for performing at least one iterative inference operation.

In this way, the weather forecast apparatus performs weather forecast by using the plurality of AI models, and does not need to perform a complex equation solving process. This can effectively reduce computing power consumed for weather forecast, and the AI model also can quickly output the weather forecast result at the target time, so that a weather forecast delay can be significantly reduced. In addition, in a weather forecast process, the weather forecast apparatus does not perform a large quantity of times of iterative inference by using a single AI model, but performs a small quantity of times of inference by using the plurality of AI models for forecasting the weather at the different time intervals. This not only can effectively reduce an iterative error, but also can reduce resource consumption required for iterative inference.

In a possible implementation, when determining the plurality of first AI models, the weather forecast apparatus may specifically determine, from the model library based on the target time, the plurality of first AI models and a quantity of iterative inference operations performed by using each of the plurality of first AI models. For example, a part of the first AI models is used for performing iterative inference for three times, and other first AI models are used for performing iterative inference for 10 times. Therefore, when performing inference by using the plurality of first AI models, specifically, the weather forecast apparatus may sequentially perform, based on the meteorological data and the quantity of iterative inference operations performed by using each of the first AI models, the iterative inference operations by using the plurality of first AI models. In this way, the weather forecast apparatus may obtain the weather forecast result at the target time by using the plurality of first AI models to separately perform the at least one iterative inference operation. This reduces an iterative error, and reduces resource consumption required for iterative inference.

In a possible implementation, the meteorological data obtained by the weather forecast apparatus may include three-dimensional meteorological data. Further, the obtained meteorological data may further include two-dimensional meteorological data. To be specific, the weather forecast apparatus may perform weather forecast based on the three-dimensional meteorological data and the two-dimensional meteorological data. In this way, precision of the weather forecast result obtained through performing inference based on the complete three-dimensional meteorological data can reach a high level, for example, may exceed precision of a weather forecast result obtained based on a conventional numerical weather prediction technology.

In actual application, the meteorological data obtained by the weather forecast apparatus may alternatively be the two-dimensional meteorological data.

In a possible implementation, the meteorological data obtained by the weather forecast apparatus is the three-dimensional meteorological data and the two-dimensional meteorological data. When performing weather forecast, the weather forecast apparatus may specifically couple the three-dimensional meteorological data with the two-dimensional meteorological data, to obtain fused meteorological data, and perform inference based on the fused meteorological data by using the plurality of first AI models, to obtain the first weather forecast result at the target time. When the two-dimensional meteorological data and the three-dimensional meteorological data are coupled, specifically, the two-dimensional meteorological data and the three-dimensional meteorological data may be separately projected to a high-dimensional vector space, and vector splicing is performed in the high-dimensional vector space, to obtain the fused meteorological data. In this way, precision of the weather forecast result obtained through performing inference based on the complete three-dimensional meteorological data can reach a high level.

In a possible implementation, when performing weather forecast, the weather forecast apparatus may specifically add, in a process of performing inference on the meteorological data by using the plurality of first AI models, biases to computation results of intermediate variables in the plurality of first AI models or computation results of attention mechanisms in the plurality of first AI models, where the bias is determined based on altitude information or latitude information in the meteorological data. In this way, the computation result of the intermediate variable in the AI models can be compensated by using the bias, so that impact of uneven distribution of the meteorological data on precision of the weather forecast result can be overcome, and accuracy of inference performed by using the AI models can be improved.

In a possible implementation, the weather forecast apparatus may further determine a plurality of second AI models from the model library based on the target time, where different second AI models in the plurality of second AI models are used for forecasting weather at different time intervals. The plurality of second AI models and the plurality of first AI models may have different data input and model structures, and use different iterative inference algorithms; or the second AI models and the first AI models are used for forecasting weather at different time intervals, or the like. Then, the weather forecast apparatus performs inference based on the meteorological data by using the plurality of second AI models, to obtain a second weather forecast result at the target time, where each of the second AI models is used for performing at least one iterative inference operation. In this way, the weather forecast apparatus may perform inference by using another group of AI models, and can obtain another weather forecast result. Therefore, the weather forecast apparatus may present a plurality of pieces of possible forecast weather by presenting the second weather forecast result, to improve user experience. Alternatively, the weather forecast apparatus may comprehensively determine a finally output weather forecast result based on a plurality of weather forecast results such as the first weather forecast result and the second weather forecast result, to further improve accuracy of weather forecast.

In a possible implementation, the weather forecast apparatus may determine a target weather forecast result based on the first weather forecast result and the second weather forecast result, for example, determine the target weather forecast result through voting or computing an average value, and output the target weather forecast result. In this way, the weather forecast apparatus may comprehensively determine and output a unique weather forecast result by integrating weather inference results obtained through inference separately performed by a plurality of groups of AI models, so that accuracy of weather forecast can be improved.

In a possible implementation, the weather forecast apparatus may further obtain location information, where the location information indicates a region, for example, indicates a city A, or indicates a global scope. In addition, the first weather forecast result obtained through inference by using the plurality of first AI models indicates weather corresponding to the location information. Therefore, when determining the plurality of first AI models, the weather forecast apparatus may specifically determine, from the model library based on the location information and time information, the plurality of first AI models used for performing inference for the weather of the region indicated by the location information. In this way, independent forecast can be performed for weather in a region.

In a possible implementation, when obtaining the target time, the weather forecast apparatus may specifically output an interaction interface first, for example, present the interaction interface by using an externally presented client, and obtain, in response to an operation by a user on the interaction interface, the target time input by the user. In this way, the user may specify a future moment or a future time period in which forecast is performed for weather, so that the weather forecast result obtained through inference can satisfy a user requirement, and user experience is improved.

According to a second aspect, an embodiment of this application further provides a weather forecast apparatus, including: a data obtaining module, configured to obtain meteorological data and target time; a model determining module, configured to determine a plurality of first artificial intelligence AI models from a model library based on the target time, where different first AI models in the plurality of first AI models are used for forecasting weather at different time intervals; and an inference module, configured to perform inference based on the meteorological data by using the plurality of first AI models, to obtain a first weather forecast result at the target time, where each of the first AI models is used for performing at least one iterative inference operation.

In a possible implementation, the model determining module is configured to determine, from the model library based on the target time, the plurality of first artificial intelligence AI models and a quantity of iterative inference operations performed by using each of the plurality of first AI models; and the inference module is configured to sequentially perform, based on the meteorological data and the quantity of iterative inference operations performed by using each of the first AI models, the iterative inference operations by using the plurality of first AI models.

In a possible implementation, the meteorological data includes three-dimensional meteorological data.

In a possible implementation, the meteorological data includes the three-dimensional meteorological data and two-dimensional meteorological data; and the inference module is configured to: couple the three-dimensional meteorological data with the two-dimensional meteorological data, to obtain fused meteorological data; and perform inference based on the fused meteorological data by using the plurality of first AI models.

In a possible implementation, the inference module is configured to: in a process of performing inference on the meteorological data by using the plurality of first AI models, add biases to computation results of intermediate variables in the plurality of first AI models or computation results of attention mechanisms in the plurality of first AI models, where the bias is determined based on altitude information or latitude information in the meteorological data.

In a possible implementation, the model determining module is further configured to determine a plurality of second AI models from the model library based on the target time, where different second AI models in the plurality of second AI models are used for forecasting weather at different time intervals; and the inference module is further configured to perform inference based on the meteorological data by using the plurality of second AI models, to obtain a second weather forecast result at the target time, where each of the second AI models is used for performing at least one iterative inference operation.

In a possible implementation, the inference module is further configured to: determine a target weather forecast result based on the first weather forecast result and the second weather forecast result; and output the target weather forecast result.

In a possible implementation, the data obtaining module is further configured to obtain location information, where the first weather forecast result indicates weather corresponding to the location information; and the model determining module is configured to determine the plurality of first artificial intelligence AI models from the model library based on the location information and the target time.

In a possible implementation, the data obtaining module is configured to: output an interaction interface; and in response to an operation by a user on the interaction interface, obtain the target time input by the user.

It should be noted that, the weather forecast apparatus provided in the second aspect corresponds to the weather forecast method provided in the first aspect. Therefore, for technical effects of the second aspect and any one of implementations of the second aspect, refer to technical effects of the first aspect or corresponding implementations of the first aspect.

According to a third aspect, this application provides a computing device, where the computing device includes a processor and a memory; and the memory is configured to store instructions, and the processor executes the instructions stored in the memory, to cause the computing device to perform the weather forecast method in the first aspect or any one of possible implementations of the first aspect. It should be noted that, the memory may be integrated into the processor, or may be independent of the processor. The computing device may further include a bus. The processor is connected to the memory through the bus. The memory may include a readable memory and a random access memory.

According to a fourth aspect, this application provides a computing device cluster, where the computing device cluster includes at least one computing device, and the at least one computing device includes at least one processor and at least one memory; and the at least one memory is configured to store instructions, and the at least one processor executes the instructions stored in the at least one memory, to cause the computing device cluster to perform the weather forecast method in the first aspect or any one of possible implementations of the first aspect. It should be noted that, the memory may be integrated into the processor, or may be independent of the processor. The at least one computing device may further include a bus. The processor is connected to the memory through the bus. The memory may include a readable memory and a random access memory.

According to a fifth aspect, this application provides a computer-readable storage medium, where the computer-readable storage medium stores instructions. When the instructions are run on at least one computing device, the at least one computing device is caused to perform the method according to the first aspect or any one of implementations of the first aspect.

According to a sixth aspect, this application provides a computer program product including instructions. When the computer program product runs on at least one computing device, the at least one computing device is caused to perform the method according to the first aspect or any one of implementations of the first aspect.

In this application, based on implementations according to the foregoing aspects, the implementations may be further combined to provide more implementations.

## BRIEF DESCRIPTION OF DRAWINGS

To describe technical solutions in embodiments of this application more clearly, the following briefly describes accompanying drawings used for describing embodiments. It is clear that the accompanying drawings in the following descriptions are merely some embodiments recorded in this application, and for a person of ordinary skill in the art, other drawings may also be derived from the accompanying drawings.

FIG. 1 is a diagram of an example application scenario according to this application;
FIG. 2 is a diagram of another example application scenario according to this application;
FIG. 3 is a schematic flowchart of a weather forecast method according to this application;
FIG. 4 is a diagram in which a plurality of AI models serially perform an inference process according to this application;
FIG. 5 is a diagram of performing weather forecast based on two-dimensional meteorological data and three-dimensional meteorological data according to this application;
FIG. 6 is a diagram of a structure of a computing device according to this application; and
FIG. 7 is a diagram of a structure of a computing device cluster according to this application.

## DESCRIPTION OF EMBODIMENTS

The following describes solutions in embodiments provided in this application with reference to accompanying drawings in this application.
In the specification, claims, and accompanying drawings of this application, terms such as "first", "second", and the like are used for distinguishing similar objects, but are not necessarily used for describing a specific order or sequence. It should be understood that, the terms used in such a way are interchangeable in proper circumstances, and this is merely a distinguishing manner used when objects with a same attribute are described in embodiments of this application.
When weather forecast is performed for a region or the world, weather of the region or the world at a future moment is forecast usually based on an NWP technology and based on data that reflects an actual atmospheric situation by modeling mathematical and physical processes and by solving complex hydrodynamic and thermodynamic equations. However, solving a complex equation needs to consume high computing power, and a forecast delay is usually high.
Based on this, an embodiment of this application provides a weather forecast method. The weather forecast method may be performed by a corresponding weather forecast apparatus, to reduce computing power required for weather forecast and shorten a forecast delay. During specific implementation, the weather forecast apparatus obtains meteorological data and target time, and determines a plurality of artificial intelligence (artificial intelligence, AI) models from a model library based on the target time. Different AI models are used for forecasting weather at different time intervals. For example, an AI model a, an AI model b, and an AI model c are determined. In addition, the AI model a is used for forecasting weather after 1 hour, the AI model b is used for forecasting weather after 12 hours, the AI model c is used for forecasting weather after 3 days, or the like. In this way, the weather forecast apparatus performs inference based on the meteorological data by using the plurality of AI models, so that a weather forecast result at the target time can be obtained. Each of the AI models is used for performing at least one iterative inference operation.
The weather forecast apparatus performs weather forecast by using the plurality of AI models, and does not need to perform a complex equation solving process. This can effectively reduce computing power consumed for weather forecast, and the AI model also can quickly output the weather forecast result at the target time, so that a weather forecast delay can be significantly reduced.
In addition, in a weather forecast process, the weather forecast apparatus does not perform a large quantity of times of iterative inference by using a single AI model, but performs a small quantity of times of inference by using the plurality of AI models for forecasting the weather at the different time intervals. This not only can effectively reduce an iterative error, but also can reduce resource consumption required for iterative inference.
For example, it is assumed that global weather after 3 days and 14 hours needs to be forecast currently. In this case, if iterative inference is performed by using the foregoing single AI model a, the weather forecast apparatus needs to perform iterative inference for 86 times (that is, $3 \times 24 + 14$) by using the AI model a, to obtain a weather forecast result after the 3 days and 14 hours through inference. However, when inference is performed by using the AI model a, the AI model b, and the AI model c, because the AI model c can forecast the weather after 3 days, the AI model b can forecast the weather after 12 hours, and the AI model a can forecast the weather after 1 hour, the weather forecast apparatus may perform inference once by using the AI model c, then perform inference once by using the AI model b, and finally perform inference twice by using the AI model c, to obtain a weather forecast result after the 3 days and 14 hours (that is, 3 days + 12 hours + 1 hour × 2).

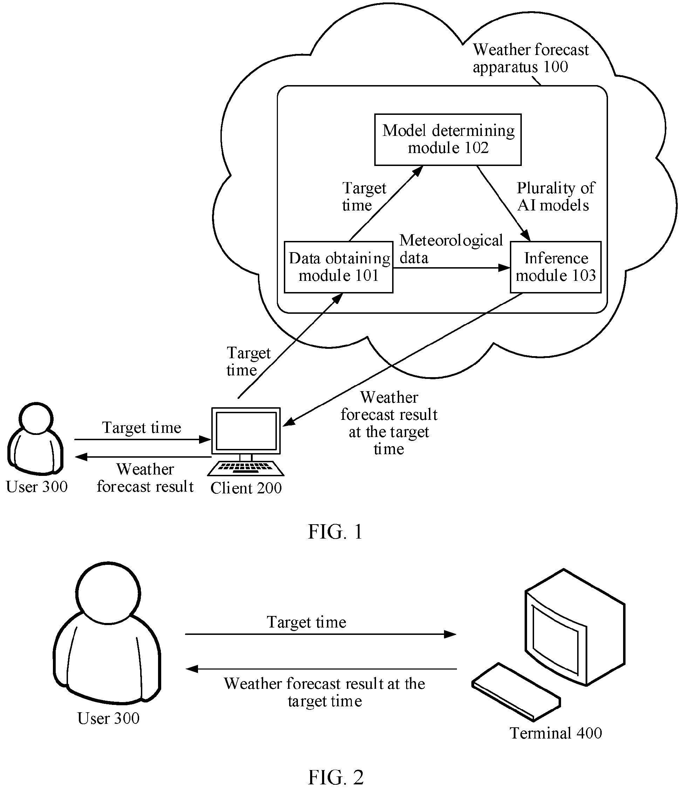

In an example, the weather forecast apparatus may be deployed in a cloud, to provide a cloud service of weather forecast for a user. For example, in an application scenario shown in FIG. 1, a weather forecast apparatus 100 may be deployed in a cloud, for example, may be implemented by a computing device in the cloud or a computing device cluster in the cloud. In addition, the weather forecast apparatus 100 may externally provide a client 200, configured to implement interaction with a user 300, for example, receive the foregoing target time input by the user 300, or feed back a target weather forecast result to the user 300. In actual application, for example, the client 200 may be an application running on a user-side device, or may be a web browser externally provided by the weather forecast apparatus 100. The weather forecast apparatus 100 may include a data obtaining module 101, a model determining module 102, and an inference module 103. The data obtaining module 101 is configured to obtain the target time input by the user 300 via the client 200, provide the target time for the model determining module 102, obtain the meteorological data from the cloud, and provide the meteorological data for the inference module 103. The model determining module 102 is configured to: determine a plurality of AI models from a model library based on the target time (where the model library is deployed in the cloud with the weather forecast apparatus 100), and provide the plurality of AI models for the inference module 103. The inference module 103 is configured to perform inference based on the meteorological data by using the plurality of AI models, to obtain a weather forecast result at the target time. Further, the inference module 103 may further send the weather forecast result at the target time to the client 200, so that the client 200 presents the weather forecast result to the user 300.

In another example, the weather forecast apparatus may be deployed locally, to provide a local weather forecast service for a user. For example, in an application scenario shown in FIG. 2, the weather forecast apparatus may be specifically a local terminal 400, so that a user 300 may input target time and meteorological data to the terminal 400. The terminal 400 determines, by using the target time, a plurality of AI models from a locally deployed model library, performs inference based on the meteorological data by using the plurality of AI models, to obtain a weather forecast result at the target time, and presents the weather forecast result to the user 300.

In actual application, the weather forecast apparatus may be implemented by software, or may be implemented by hardware.

The weather forecast apparatus is used as an example of a software functional unit, and may include code that is run on a computing instance. The computing instance may include at least one of a host, a virtual machine, and a container. Further, there may be one or more computing instances. For example, the weather forecast apparatus may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/-containers configured to run the code may be distributed in a same availability zone (availability zone, AZ), or may be distributed in different AZs. Each of the AZs includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

The weather forecast apparatus is used as an example of a hardware functional unit, and the weather forecast apparatus may include at least one computing device, for example, a server. Alternatively, the weather forecast apparatus may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), a data processing unit (Data processing unit, DPU), or any combination thereof.

A plurality of computing devices included in the weather forecast apparatus may be distributed in a same region, or may be distributed in different regions. The plurality of computing devices included in the weather forecast apparatus may be distributed in a same AZ, or may be distributed in different AZs. Similarly, the plurality of computing devices included in the weather forecast apparatus may be distributed in a same VPC, or may be distributed in a plurality of VPCs. The plurality of computing devices may be any combination of computing devices such as a server, an ASIC, a PLD, a CPLD, an FPGA, and a GAL.

Next, various non-limiting specific implementations of the weather forecast process are described in detail.

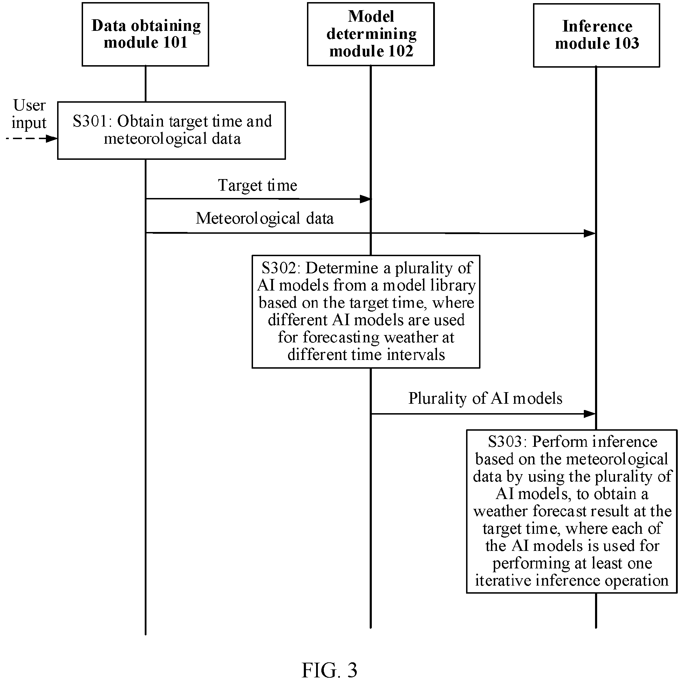

FIG. 3 is a schematic flowchart of a weather forecast method according to an embodiment of this application. The method may be applied to the application scenario shown in FIG. 1 or FIG. 2, or may be applied to another applicable application scenario. The following uses an example in which the method is applied to the application scenario shown in FIG. 1 for description. In the application scenario shown in FIG. 1, for specific functions of a data obtaining module 101, a model determining module 102, and an inference module 103 in a weather forecast apparatus 100, refer to related descriptions in the following embodiments.

The weather forecast method shown in FIG. 3 may specifically include the following steps.

S301: The data obtaining module 101 obtains target time and meteorological data.

Usually, when weather forecast is performed, time corresponding to weather to be forecast, which is referred to as the target time hereinafter, may be first determined, for example, weather after 24 hours is to be forecast.

In an example of obtaining the target time, the weather forecast apparatus 100 may externally provide a client 200, and the client 200 may present an interaction interface to a user 300, so that the user 300 may input the target time of the to-be-forecast weather on the interaction interface. Correspondingly, the weather forecast apparatus 100 obtains, in response to an operation by the user 300 on the interaction interface, the target time input by the user. The target time input by the user 300 may be a moment. For example, if a current moment may be 8:00:00, the target time may be a future moment 18:00:00 that is 10 hours away from the current moment. Therefore, the weather forecast apparatus 100 may subsequently feed back a weather forecast result corresponding to the moment 18:00:00 to the user 300. Alternatively, the target time input by the user 300 may be a time period, for example, may be a time period between 8:00:00 and 18:00:00. Therefore, the weather forecast apparatus 100 may subsequently feed back weather forecast results respectively corresponding to a plurality of moments in the time period to the user 300, for example, feed back a weather forecast result corresponding to 9:00:00, a weather forecast result corresponding to 10:00:00, a weather forecast result corresponding to 13:00:00, and a weather forecast result corresponding to 18:00:00. Alternatively, the weather forecast apparatus 100 may perform periodic weather forecast by default, and a moment corresponding to the periodicity may be the target time or the like.

In addition, the data obtaining module 101 further obtains the meteorological data. The meteorological data may be two-dimensional meteorological data, or may be three-dimensional meteorological data, or may include both the two-dimensional meteorological data and the three-dimensional meteorological data. The two-dimensional meteorological data may be, for example, information such as a temperature, humidity, a wind speed, total rainfall, and total illumination. The three-dimensional meteorological data may be, for example, information such as an isobaric surface, an altitude, a temperature, and humidity.

In some examples of obtaining the meteorological data, the user 300 may import the meteorological data to the weather forecast apparatus 100 via the client 200, so that the data obtaining module 101 may receive the meteorological data sent by the client 200. Alternatively, the weather forecast apparatus 100 may obtain the meteorological data from a network, for example, may obtain current meteorological data in real time by remotely accessing a meteorological detection device.

It should be noted that, an implementation in which the data obtaining module 101 obtains the target time and the meteorological data is merely used as an example for description. In actual application, the data obtaining module 101 may alternatively obtain the target time and the meteorological data in another manner. This is not limited in this embodiment.

After obtaining the target time and the meteorological data, the data obtaining module 101 may provide the target time for the model determining module 102, and provide the meteorological data for the inference module 103.

S302: The model determining module 102 determines a plurality of AI models from a model library based on the target time, where different AI models in the plurality of AI models are used for forecasting weather at different time intervals.

The model library may be deployed in the weather forecast apparatus 100. The model library includes a plurality of different AI models, and the different AI models are used for forecasting the weather at the different time intervals. For example, the model library may include 10 AI models, and the 10 AI models are respectively used for forecasting weather after 1 hour, 2 hours, 3 hours, 5 hours, 7 hours, 12 hours, 24 hours (namely, 1 day), 72 hours (namely, 3 days), 168 hours (namely, 7 days), and 360 hours (namely, 15 days). Further, the model library may further include a plurality of AI models used for forecasting weather at a same time interval. The plurality of AI models have different model input, model structures, iterative inference algorithms used for model inference, model training algorithms, and the like. For example, the model library may further include an AI model m, an AI model n, and an AI model w. In addition, the three AI models are all used for forecasting weather after one hour. Training of the AI model m and the AI model n is completed by using different training algorithms, the AI model m and the AI model w have different neural network architectures, and the like.

For example, the AI model in the model library may be constructed based on a neural network of a transformer structure, for example, constructed based on a vision transformer (vision transformer), or may be constructed based on another type of neural network. This is not limited in this embodiment.

In this embodiment, the weather forecast apparatus 100 may select the plurality of AI models from the model library, to forecast weather at the target time. During specific implementation, the model determining module 102 may first select, from the model library based on the target time, the plurality of AI models for performing weather forecast this time, and total duration of time intervals of the weather forecast by using the plurality of AI models matches the target time.

For example, it is assumed that the target time is 3 days and 15 hours. For example, weather after the 3 days and 15 hours from the current moment is forecast. In this case, the model determining module 102 may select, from the model library based on the target time, an AI model x used for forecasting weather after 3 hours, an AI model y used for forecasting weather after 12 hours, and an AI model z used for forecasting weather after 72 hours. Interval duration of the weather that can be forecast by using the three AI models may be 87 hours (that is, 3 hours + 12 hours + 72 hours), namely, the 3 days and 15 hours.

After determining the plurality of AI models, the model determining module 102 may provide the plurality of AI models for the inference module 103.

S303: The inference module 103 performs inference based on the obtained meteorological data by using the plurality of AI models, to obtain a weather forecast result at the target time, where each of the AI models is used for performing at least one iterative inference operation.

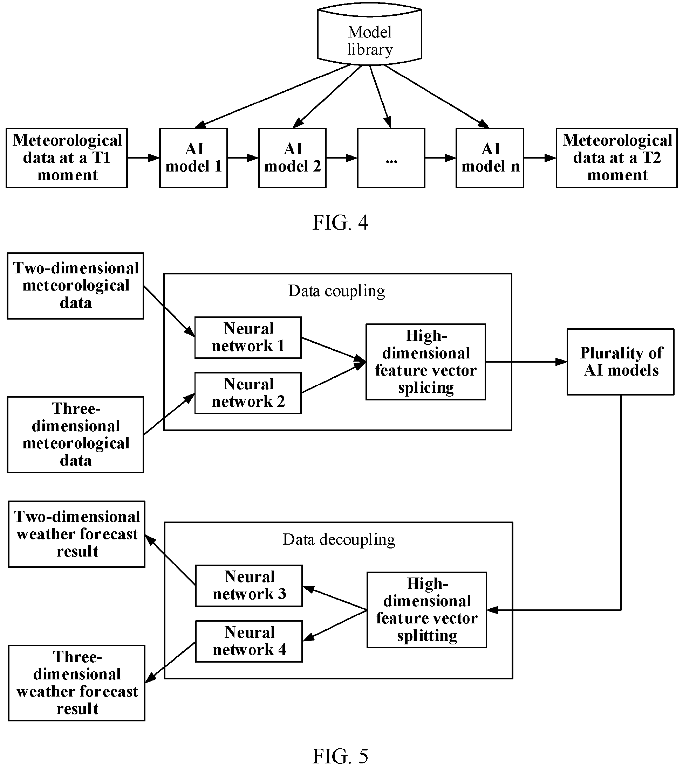

During specific implementation, the inference module 103 may input the meteorological data into one AI model of the AI models, the AI model is used for performing inference based on the meteorological data, and an obtained inference result 1 may be used as input of a 2nd AI model. In addition, the 2nd AI model is used for performing inference based on the inference result 1, and an obtained inference result 2 continues to be input into a next AI model. In other words, after the inference module 103 inputs meteorological data at a moment T1 into a 1st AI model, input of another AI model is an inference result output by a previous AI model, as shown in FIG. 4. In this way, the inference module 103 sequentially performs inference operations by using the plurality of AI models, so that a weather forecast result output by a last AI model can be obtained, that is, a weather forecast result at a moment T2 shown in FIG. 4 can be obtained.

A sequence in which the plurality of AI models are used for sequentially performing inference may be determined by the inference module 103 according to a preset rule. For example, the sequence in which the plurality of AI models are used for sequentially performing the inference operations may be an ascending sequence of the time intervals of the weather that can be forecast by using the plurality of AI models. An example in which the target time is 3 days and 15 hours is still used. The 1st AI model that is used for performing the inference operation may be the AI model x used for forecasting the weather after 3 hours, and an inference result 1 obtained through performing inference by using the AI model x based on the meteorological data may be used as input of the AI model y used for forecasting the weather after 12 hours. After the inference operation is performed, the AI model y outputs an inference result 2, and the inference result 2 is used as input of the AI model z used for forecasting the weather after 72 hours. In this way, after the inference operation is performed, the AI model z outputs a final inference result, that is, outputs the weather forecast result at the target time. Alternatively, the sequence in which the plurality of AI models are sequentially used for performing inference may be randomly determined by the inference module 103. For example, the inference module 103 may determine, based on a random algorithm, that a sequence in which the AI model x, the AI model y, and the AI model z are used for performing inference is the AI model z -> the AI model x -> the AI model y. In this embodiment, the sequence in which the plurality of AI models are used for performing the inference operations is not limited.

In actual application, when there are many AI models that are used for forecasting the weather at the different time intervals and that are in the model library, for example, the model library may include 10 AI models respectively used for forecasting weather of 1 hour, 2 hours, 3 hours, 5 hours, 7 hours, 12 hours, 24 hours, 72 hours, 168 hours, and 360 hours, for any target time, the inference module 103 may obtain the weather forecast result at the target time through separately performing an inference process by using each of the determined AI models. For example, it is assumed that the target time is 3 days and 15 hours. In this case, the inference module 103 may obtain a weather forecast result of the 3 days and 15 hours through separately performing an inference process by sequentially using the AI model x, the AI model y, and the AI model z.

However, when there are few AI models that are used for forecasting the weather at the different time intervals and that are in the model library, for example, the model library includes four AI models respectively used for forecasting weather after 1 hour, 12 hours, 72 hours, and 168 hours, for any target time, the model determining module 102 may determine, from the model library based on the target time, the plurality of AI models and a quantity of iterative inference operations performed by using each of the AI models, and provide the determined plurality of AI models and the determined quantity of iterative inference operations performed by using each of the AI models for the inference module 103. The inference module 103 may iteratively perform an inference process for a plurality of times on a part or all of the AI models based on the quantity of iterative inference operations performed by using each of the AI models, to obtain the weather forecast result at the target time. Still in an example in which the target time is 3 days and 15 hours, the model determining module 102 may determine, from the model library based on the target time, an AI model o used for forecasting weather after 1 hour, an AI model p used for forecasting weather after 12 hours, and an AI model q used for forecasting weather after 72 hours. A quantity of iterative inference operations that need to be performed by using the AI model o is 3, a quantity of iterative inference operations that need to be performed by using the AI model p is 1, and a quantity of iterative inference operations that need to be performed by using the AI model q is 1. Correspondingly, total duration of time intervals of the weather that can be forecast by using the plurality of AI models is 87 hours (that is, 1 hour × 3 + 12 hours × 1 + 72 hours × 1). In this way, based on a quantity of times of iteration corresponding to each of the AI models, the inference module 103 may iteratively perform three inference operations by using the AI model o, and provide a result obtained through the three times of iterative inference for the AI model p. Then, the inference module 103 performs one inference operation by using the AI model p, and provides a result obtained through performing the inference operation for the AI model q. In this way, after one inference operation is performed, the AI model q may output and obtain the weather forecast result at the target time. For example, the plurality of AI models that are determined by the model determining module 102 and the quantity that is determined by the model determining module 102 and that is of inference operations performed by using each of the AI models may satisfy the following formula (1):

$$ T = f_1 * N_1 + f_2 * N_2 + \cdots + f_n * N_n \quad (1) $$

T is the target time; $f_1$ to $f_n$ respectively refer to n AI models determined by the model determining module 102; and $N_1$ to $N_n$ respectively refer to the quantity of inference operations that need to be performed by using the AI models $f_1$ to $f_n$. For example, $N_1$ refers to a quantity of inference operations that need to be performed by using the AI model $f_1$, and $N_n$ refers to a quantity of inference operations that need to be performed by using the AI model $f_n$.

Correspondingly, training of the plurality of AI models in the model library may be completed in advance based on meteorological data in a past time period. For example, for an AI model that is used for forecasting weather after a time interval of 1 hour and that is in the model library, training of the AI model may be completed by using meteorological data at 5:00:00 in the past time period and meteorological data at 6:00:00. Specifically, the meteorological data at 5:00:00 may be used as input of the AI model, and the AI model is used for performing inference based on the input, to obtain meteorological data at 6:00:00 forecast by using the AI model. Then, gradient adjustment is performed on a parameter in the AI model through comparing a difference between the meteorological data at 6:00:00 forecast by using the AI model and the actual meteorological data at 6:00:00, to perform iterative training on the AI model by using a plurality of groups of meteorological data, until a training termination condition of the AI model is satisfied, for example, a value of a loss function of the AI model is less than a preset value. In a similar manner, the plurality of AI models used for forecasting the weather at the different time intervals may be obtained through training. In actual application, the plurality of AI models in the model library may alternatively be obtained through training in another manner. This is not limited in this embodiment. After the plurality of AI models are obtained through training, a model library may be created based on the plurality of AI models, and the model library is deployed in the weather forecast apparatus 100. Training of the plurality of AI models in the model library may be completed by the weather forecast apparatus 100, or may be sent to the weather forecast apparatus 100 by another device after the another device completes training of the AI models, or the like. This is not limited in this embodiment.

In a process of forecasting the weather at the target time, the meteorological data input by the inference module 103 into one of the AI models may be two-dimensional meteorological data, or may be three-dimensional meteorological data, or may include both the two-dimensional meteorological data and the three-dimensional meteorological data. When the meteorological data includes both the two-dimensional meteorological data and the three-dimensional meteorological data, before inputting the meteorological data into the AI model, the inference module 103 may couple the two-dimensional meteorological data with the three-dimensional meteorological data in advance, to obtain fused meteorological data. In this way, the inference module 103 performs inference based on the fused meteorological data by using the plurality of AI models.

In a possible implementation, the inference module 103 may input the two-dimensional meteorological data into a neural network 1, so that the neural network 1 projects the two-dimensional meteorological data into a high-dimensional (three-dimensional or more) space, to obtain a high-dimensional feature vector. In addition, the inference module 103 further inputs the three-dimensional meteorological data into a neural network 2, so that the neural network 2 projects the three-dimensional meteorological data into a high-dimensional (three-dimensional or more) space, to obtain a high-dimensional feature vector, as shown in FIG. 5. Then, the inference module 103 may splice the high-dimensional feature vector output by the neural network 1 and the high-dimensional feature vector output by the neural network 2. Between the high-dimensional feature vectors output by the two neural networks, expect for a difference in a feature vector corresponding to a dimension of altitude in the three-dimensional meteorological data, feature vectors of remaining dimensions match each other, that is, a sum operation may be performed on values of the feature vectors of the remaining dimensions in a process of splicing the high-dimensional feature vectors. A new high-dimensional feature vector obtained through computation is the foregoing fused meteorological data. For example, the neural network 1 outputs feature vectors of five dimensions, and the neural network 2 outputs feature vectors of six dimensions. Feature vectors of five dimensions in the feature vectors of the six dimensions match the feature vectors that are of the five dimensions and that are output by the neural network 1, and a feature vector of a sixth dimension in the feature vectors of the six dimensions is the feature vector corresponding to the dimension of altitude in the three-dimensional meteorological data. In this case, when the feature vectors that are of the five dimensions and that are output by the neural network 1 and the feature vectors that are of the six dimensions and that are output by the neural network 2 are spliced, a value of the feature vector of the sixth dimension in the feature vectors of the six dimensions remains unchanged, and values of the feature vectors of the remaining five dimensions in the feature vectors of the six dimensions may be correspondingly summed up with values of the feature vectors that are of the five dimensions and that are output by the neural network 1. In this way, in comparison with a manner in which weather forecast is performed based only on the two-dimensional meteorological data, in modeling and weather forecast performed based on the complete three-dimensional meteorological data, not only information in more dimensions can be integrated, but also a relationship feature between data in more dimensions is retained, so that precision of the weather forecast result can be effectively improved.

For example, the neural network 1 and the neural network 2 that are used for coupling the two-dimensional meteorological data with the three-dimensional meteorological data may be, for example, any one or more of a fully connected neural network (fully connected neural network, FCNN) and a convolutional neural network (convolutional neural network, CNN) whose convolution kernel is 1, or may be another applicable neural network. This is not limited in this embodiment.

After the weather forecast result is obtained through performing inference based on the fused meteorological data by using the plurality of AI models, the inference module 103 may further decouple the weather forecast result, to obtain a two-dimensional weather forecast result and a three-dimensional weather forecast result, as shown in FIG. 5. A data decoupling process may be an inverse operation of the foregoing data coupling process. Specifically, the weather forecast result output by the last AI model in the plurality of AI models may be a high-dimensional feature vector, so that the inference module 103 may split the high-dimensional feature vector, to obtain two different high-dimensional feature vectors. A process of splitting the high-dimensional feature vector is opposite to the foregoing process of splicing the high-dimensional feature vectors. Then, the two high-dimensional feature vectors obtained through splitting may be respectively input into a neural network 3 and a neural network 4 by the inference module 103, so that the two neural networks output the two-dimensional weather forecast result and the three-dimensional weather forecast result, as shown in FIG. 5.

Correspondingly, when the meteorological data includes both the two-dimensional meteorological data and the three-dimensional meteorological data, the plurality of AI models in the model library may be trained based on the two-dimensional meteorological data and the three-dimensional meteorological data that are in the past time period. Specifically, the AI models may be trained by using the fused meteorological data obtained through coupling the two-dimensional meteorological data with the three-dimensional meteorological data. For a process of training the AI models by using the fused meteorological data, refer to the foregoing related descriptions of training the AI models. Details are not described herein again.

In an actual application scenario, the meteorological data is usually distributed unevenly and irregularly. For example, meteorological data near the equator (namely, a low latitude) is usually sparsely distributed, and meteorological data near the Antarctic or the Arctic (namely, a high latitude) is usually densely distributed. For another example, altitudes (a type of meteorological data) of isobaric surfaces in different regions are usually different. For example, atmospheric pressure at an altitude of 1 km in a region A is the same as atmospheric pressure at an altitude of 2 km in a region B. Therefore, in a process of performing weather forecast by using the plurality of AI models, the inference module 103 may compensate for an computation result of the intermediate variable in the AI models, to overcome impact of uneven distribution of the meteorological data on precision of the weather forecast result.

In an implementation example, in a process of performing inference by using each of the AI models, the inference module 103 may add biases (biases) to computation results of intermediate variables of computation units in the AI models, where the bias is determined based on altitude information or latitude information in the meteorological data. To be specific, for computation results that are of intermediate variables and that are computed by the AI models based on meteorological data at different locations, if latitudes or altitudes are different, values of biases added to the computation results of the intermediate variables are also different. However, when the latitudes (and the altitudes) are the same, the values of the biases added to the computation results of the intermediate variables are the same.

In another implementation example, each of the AI models is used for performing inference by using an attention (attention) mechanism. In this case, in a process of performing inference by using each of the AI models, the inference module 103 may add a bias to a computation result of the attention mechanism in each of the AI models, where the bias is determined based on altitude information or latitude information in the meteorological data. To be specific, for computation results that are of attention mechanisms and that are computed by the AI models based on meteorological data at different locations, if latitudes or altitudes are different, values of biases added to the computation results of the attention mechanisms are also different. However, when the latitudes (and the altitudes) are the same, the values of the biases added to the computation results of the attention mechanisms are the same. Further, the bias added to the computation result of the attention mechanism may alternatively satisfy translation symmetry in longitude. To be specific, when the computation results that are of the attention mechanisms and that are computed based on the meteorological data at the different locations, because rotation of different geographical locations around the earth axis satisfies symmetry, for computation results of attention mechanisms corresponding to two geographical locations with a same longitude difference relative to the earth axis, biases of same values may be added (when consistency of altitude information and consistency of latitude information are both satisfied). In this way, the bias is added to the computation result of the intermediate variable in the AI model or the computation result of the attention mechanism in the AI model, so that impact caused by irregularity of the meteorological data on the weather forecast result can be overcome, and precision of the weather forecast result can be further improved.

In a further possible implementation, alternatively, the weather forecast apparatus 100 may separately predict the weather at the target time based on the meteorological data and a plurality of groups of AI models, to provide a plurality of forecast possibilities of the weather at the target time. The following uses an example in which two groups of AI models are determined to perform weather forecast for description. For ease of distinction and description, the AI models used for performing weather forecast are referred to as first AI models (namely, a first group of AI models) below, and the obtained weather forecast result at the target time is referred to as a second forecast result.

The model determining module 102 may not only determine the foregoing plurality of first AI models, but also determine a plurality of second AI models (namely, a second group of AI models). Different second AI models in the plurality of second AI models are used for forecasting the weather at the different time intervals. In addition, total duration of the time intervals of the weather forecast by using the plurality of second AI models matches the target time, and each of the second AI models is used for performing at least one iterative inference operation. Compared with the first AI models, the determined second AI models may have a different combination of time intervals of the forecast weather. For example, it is assumed that the target time is 3 days and 15 hours. In this case, the plurality of first AI models determined by the model determining module 102 are respectively an AI model x used for forecasting weather after 3 hours, an AI model y used for forecasting weather after 12 hours, and an AI model z used for forecasting weather after 72 hours; and the determined plurality of second AI models are an AI model u used for forecasting weather after 1 hour, an AI model v used for forecasting weather after 6 hours, and an AI model w used for forecasting weather after 24 hours. Alternatively, there may be another possible combination. Then, the inference module 103 may perform inference based on the meteorological data by using the plurality of second AI models, to obtain a second weather forecast result at the target time. The inference module 103 may specifically perform iterative inference by using the AI model u for three times, perform iterative inference by using the AI model v twice, and perform iterative inference by using the AI model w for three times. In this way, total duration of time intervals corresponding to the three AI models is 3 days and 15 hours (that is, 1 hour × 3 + 6 hours × 2 + 24 hours × 3). For a specific implementation process in which the inference module 103 obtains the second weather forecast result at the target time through inference by using the plurality of second AI models, refer to related descriptions of obtaining the first weather forecast result at the target time through inference by using the plurality of first AI models in the foregoing embodiments. Details are not described herein again.

Alternatively, the plurality of second AI models determined by the inference module 103 are different from the first AI models in terms of model input, model structures, iterative inference algorithms used for model inference, model training algorithms, and the like. This is not limited in this embodiment.

After obtaining a plurality of different weather forecast results through inference based on the plurality of groups of AI models, the inference module 103 may present the plurality of different weather forecast results to the user 300 via the client 200, so that the user 300 evaluates the weather at the future target time based on the plurality of weather forecast results.

Alternatively, the inference module 103 may determine a unique weather forecast result based on the plurality of different weather forecast results. During specific implementation, the inference module 103 may compare a difference between the first weather forecast result and the second weather forecast result. In addition, if the difference between the first weather forecast result and the second weather forecast result falls within a preset error range, the inference module 103 may use the first weather forecast result or the second weather forecast result as a finally determined target weather forecast result, and output the target weather forecast result. However, if the difference between the first meteorological forecast result and the second meteorological forecast result exceeds the preset error range, the inference module 103 may re-forecast the weather at the target time based on the meteorological data. Alternatively, the inference module 103 may determine a third weather forecast result based on the meteorological data by using a third group of AI models, and determine, in a manner in which the minority is subordinate to the majority, a weather forecast result with a largest quantity of same or similar weather forecast results in the plurality of weather forecast results as the final and unique output target weather forecast result. Alternatively, the inference module 103 may determine the unique target weather forecast result through weighted computation or the like. This is not limited in this embodiment. In this way, the weather forecast apparatus 100 may forecast the plurality of weather results based on the plurality of groups of AI models, to implement a large amount of integrated weather forecast.

After determining the target weather forecast result, the inference module 103 may further output the target weather forecast result to the user 300. For example, the inference module 103 may send the target weather forecast result to the client 200, and the client 200 presents the target weather forecast result to the user 300.

It should be noted that, in this embodiment, an example in which the weather forecast apparatus 100 forecasts weather in a region by default or forecasts global weather by default is used for description. In another embodiment, the weather forecast apparatus 100 may further perform weather forecast for a region specified by the user. During specific implementation, the data obtaining module 101 may further obtain location information, where the location information indicates a region in which weather forecast needs to be performed. For example, the data obtaining module 101 may obtain, via the client 200, the location information input by the user, so that the model determining module 102 may determine, from the model library based on the location information and the target time, the plurality of AI models (for example, the first AI models or the second AI models) used for forecasting the weather of the region indicated by the location information. In this way, the weather of the region indicated by the location information is forecast by using the determined plurality of AI models. In this way, the user may specify a region in which weather needs to be forecast, to implement independent forecast for the weather in the region, so that selectivity in performing weather forecast for the user is improved, to improve user experience.

In this embodiment, the weather forecast apparatus 100 performs weather forecast by using the plurality of AI models, and does not need to perform a complex equation solving process. This can effectively reduce computing power consumed for weather forecast, and the AI model also can quickly output the weather forecast result at the target time, so that a weather forecast delay can be significantly reduced. In a weather forecast process, the weather forecast apparatus 100 does not perform a large quantity of times of iterative inference by using a single AI model, but performs a small quantity of times of inference by using the plurality of AI models for forecasting the weather at the different time intervals. This not only can effectively reduce an iterative error, but also can reduce resource consumption required for iterative inference.

In addition, when the meteorological data includes the three-dimensional meteorological data, in comparison with a manner in which weather forecast is performed based only on the two-dimensional meteorological data, in modeling and weather forecast performed based on the complete three-dimensional meteorological data, not only information in more dimensions can be integrated, but also a relationship feature between data in more dimensions is retained, so that precision of weather forecast can be effectively improved. In addition, in the process of performing inference by using the AI model, the bias is added to the computation result of the intermediate variable or the computation result of the attention mechanism, so that impact caused by irregularity of the meteorological data on the weather forecast result can be overcome, and precision of the weather forecast result can be further improved. In an actual application scenario, precision of weather forecast performed in the foregoing manner can exceed precision of weather forecast performed based on an NWP technology.

In the embodiment shown in FIG. 3, the weather forecast apparatus 100 (including the data obtaining module 101, the model determining module 102, and the inference module 103) involved in the weather forecast process may be software configured on a computing device or a computing device cluster. In addition, by running the software on the computing device or the computing device cluster, the computing device or the computing device cluster may be caused to implement functions of the weather forecast apparatus 100. The following describes in detail the weather forecast apparatus 100 involved in the weather forecast process from a perspective of hardware device implementation.

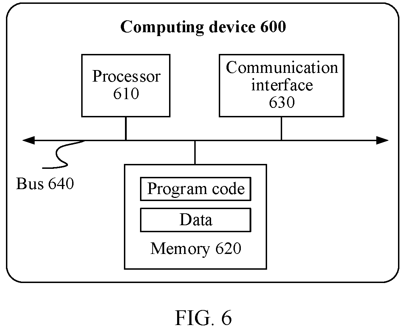

FIG. 6 is a diagram of a structure of a computing device. The foregoing weather forecast apparatus 100 may be deployed on the computing device. The computing device may be a computing device (for example, a server) in a cloud environment, a computing device in an edge environment, a terminal device, or the like, and may be specifically configured to implement functions of the data obtaining module 101, the model determining module 102, and the inference module 103 in the embodiment shown in FIG. 3.

As shown in FIG. 6, the computing device 600 includes a processor 610, a memory 620, a communication interface 630, and a bus 640. The processor 610, the memory 620, and the communication interface 630 communicate with each other through the bus 640. The bus 640 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used for representing the bus in FIG. 6, but this does not mean that there is only one bus or only one type of bus. The communication interface 630 is configured to communicate with the outside, for example, obtain meteorological data, target time, and location information, and output a weather forecast result.

The processor 610 may be a central processing unit (central processing unit, CPU), an application-specific integrated circuit (application-specific integrated circuit, ASIC), a graphics processing unit (graphics processing unit, GPU), or one or more integrated circuits. The processor 610 may alternatively be an integrated circuit chip, and has a signal processing capability. In an implementation process, functions of the modules in the weather forecast apparatus 100 may be completed by using an integrated logic circuit of hardware in the processor 610 or by using instructions in a form of software. The processor 610 may alternatively be a general-purpose processor, a digital signal processor (digital signal processor, DSP), a field programmable gate array (field programmable gate array, FPGA) or another programmable logic device, a discrete gate or a transistor logic device, or a discrete hardware component, and may implement or perform methods, steps, and logical block diagrams disclosed in embodiments of this application. The general-purpose processor may be a microprocessor, the processor may be any conventional processor, or the like. The method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 620. The processor 610 reads information in the memory 620, and completes a part or all of functions of the weather forecast apparatus 100 in combination with hardware in the processor 610.

The memory 620 may include a volatile memory (volatile memory), for example, a random access memory (random access memory, RAM). The memory 620 may further include a non-volatile memory (non-volatile memory), for example, a read-only memory (read-only memory, ROM), a flash memory, an HDD, or an SSD.

The memory 620 stores executable code, and the processor 610 executes the executable code to perform the method performed by the weather forecast apparatus 100.

Specifically, when the embodiment shown in FIG. 3 is implemented, and the data obtaining module 101, the model determining module 102, and the inference module 103 described in the embodiment shown in FIG. 3 are implemented by software, software or program code required for performing the functions of the data obtaining module 101, the model determining module 102, and the inference module 103 in FIG. 3 is stored in the memory 620. Interaction between the data obtaining module 101 and another device is implemented through the communication interface 630. The processor is configured to execute instructions in the memory 620, to implement the method perform by the weather forecast apparatus 100.

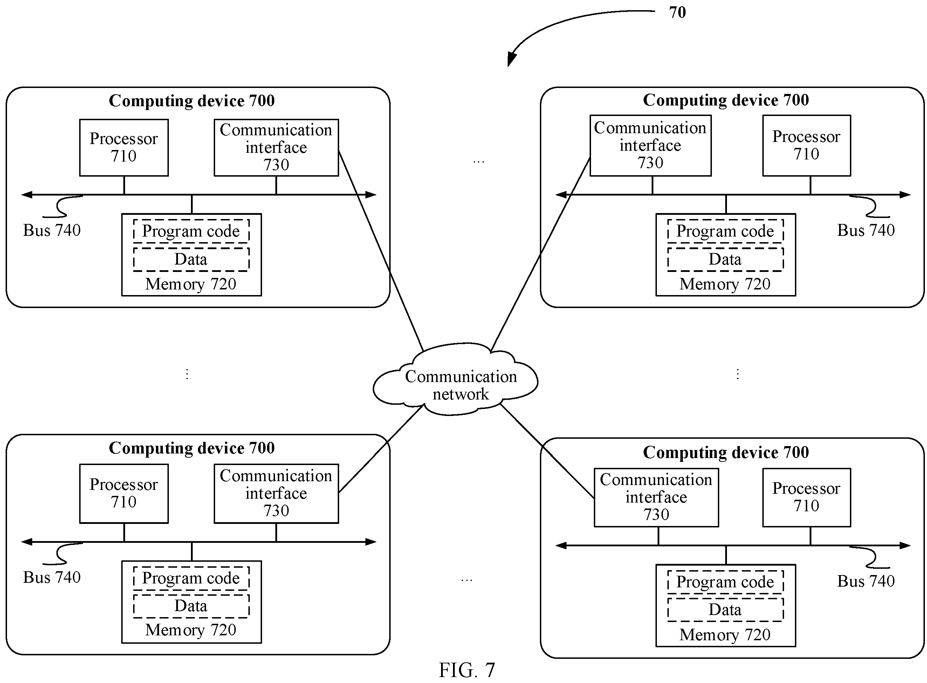

FIG. 7 is a diagram of a structure of a computing device cluster. The computing device cluster 70 shown in FIG. 7 includes a plurality of computing devices, and the foregoing weather forecast apparatus 100 may be deployed on the plurality of computing devices in the computing device cluster 70 in a distributed manner. As shown in FIG. 7, the computing device cluster 70 includes a plurality of computing devices 700, and each of the computing devices 700 includes a memory 720, a processor 710, a communication interface 730, and a bus 740. The memory 720, the processor 710, and the communication interface 730 implement a communication connection to each other through the bus 740.

The processor 710 may be a CPU, a GPU, an ASIC, or one or more integrated circuits. The processor 710 may alternatively be an integrated circuit chip, and has a signal processing capability. In an implementation process, a part of functions of the weather forecast apparatus 100 may be completed by using an integrated logic circuit of hardware in the processor 710 or by using instructions in a form of software. The processor 710 may alternatively be a DSP, an FPGA, a general-purpose processor, another programmable logic device, a discrete gate or a transistor logic device, or a discrete hardware component, and may implement or perform a part of methods, steps, and logical block diagrams disclosed in embodiments of this application. The general-purpose processor may be a microprocessor, the processor may be any conventional processor, or the like. Steps of the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 720. In each of the computing devices 700, the processor 710 reads information in the memory 720, and may complete a part of functions of the weather forecast apparatus 100 in combination with hardware in the processor 710.

The memory 720 may include a ROM, a RAM, a static storage device, a dynamic storage device, a hard disk (for example, an SSD or an HDD), and the like. The memory 720 may store program code, for example, may store a part or all of program code used for implementing a data obtaining module 101, a part or all of program code used for implementing a model determining module 102, and a part or all of program code used for implementing an inference module 103. For each of the computing devices 700, when the program code stored in the memory 720 is executed by the processor 710, the processor 710 performs, based on the communication interface 730, a part of methods performed by the weather forecast apparatus 100. For example, a part of the computing devices 700 may be configured to perform the method performed by the data obtaining module 101, a part of the computing devices 700 may be configured to perform the method performed by the model determining module 102, and a part of the computing devices 700 are configured to perform the method performed by the inference module 103. The memory 720 may further store data, for example, store intermediate data or result data generated by the processor 710 in an execution process, such as the foregoing first weather forecast result, the second weather forecast result, or the target weather forecast result.

The communication interface 703 in each of the computing devices 700 is configured to communicate with the outside, for example, interact with another computing device 700.

The bus 740 may be a peripheral component interconnect bus, an extended industry standard architecture bus, or the like. For ease of representation, only one thick line is used for representing the bus 740 in each of the computing devices 700 in FIG. 7, but this does not mean that there is only one bus or only one type of bus.

A communication path is established between the plurality of computing devices 700 via a communication network, to implement functions of the weather forecast apparatus 100. Any one of the computing devices may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are caused to perform the methods performed by the modules of the weather forecast apparatus 100 in the foregoing embodiments.

In addition, an embodiment of this application further provides a computer program product. When the computer program product is executed by one or more computing devices, the one or more computing devices perform any one of methods in the foregoing weather forecast method. The computer program product may be a software installation package. When any one of the methods in the weather forecast method needs to be applied, the computer program product may be downloaded and executed on a computer.

In addition, it should be noted that, the apparatus embodiments described above are merely examples. Units described as separate components may or may not be physically separate, and components displayed as units may or may not be physical units, to be specific, may be located at one location, or may be distributed on a plurality of network units. A part or all of the modules may be selected based on an actual requirement, to achieve the objectives of the solutions of embodiments. In addition, in the accompanying drawings of the apparatus embodiments provided in this application, a connection relationship between the modules indicates that there is a communication connection between the modules, and may be specifically implemented as one or more communication buses or signal cables.

Based on the descriptions of the foregoing implementations, a person skilled in the art may clearly understand that, this application may be implemented by software in addition to necessary universal hardware, or certainly may be implemented by dedicated hardware, including an application-specific integrated circuit, a dedicated CPU, a dedicated memory, a dedicated component, and the like. Generally, any functions completed by a computer program can be easily implemented by corresponding hardware. In addition, a specific hardware structure used for implementing a same function may also be various, such as an analog circuit, a digital circuit, or a dedicated circuit. However, for this application, software program implementation is a preferred implementation in most cases. Based on such an understanding, the technical solutions of this application essentially or the part contributing to a conventional technology may be embodied in a form of a software product. The computer software product is stored in a readable storage medium, such as a floppy disk, a USB flash drive, a removable hard disk, a ROM, a RAM, a magnetic disk, or an optical disc of a computer, and includes a plurality of instructions for instructing a computer device (which may be a personal computer, a training device, a network device, or the like) to perform the methods in embodiments of this application.

All or a part of the foregoing embodiments may be implemented by using software, hardware, firmware, or any combination thereof. When software is used for implementing embodiments, all or a part of embodiments may be implemented in a form of a computer program product.

The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored in a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A weather forecast method, wherein the method comprises:

   Obtaining meteorological data and target time;
   Determining a plurality of first artificial intelligence AI models from a model library based on the target time, wherein different first AI models in the plurality of first AI models are used for forecasting weather at different time intervals; and
   Performing inference based on the meteorological data by using the plurality of first AI models, to obtain a first weather forecast result at the target time, wherein each of the first AI models is used for performing at least one iterative inference operation.

2. The method according to claim 1, wherein the determining a plurality of first artificial intelligence AI models from a model library based on the target time comprises:

   determining, from the model library based on the target time, the plurality of first artificial intelligence AI models and a quantity of iterative inference operations performed by using each of the plurality of first AI models; and
   the performing inference based on the meteorological data by using the plurality of first AI models comprises:
   sequentially performing, based on the meteorological data and the quantity of iterative inference operations performed by using each of the first AI models, the iterative inference operations by using the plurality of first AI models.

3. The method according to claim 1 or 2, wherein the meteorological data comprises three-dimensional meteorological data.

4. The method according to claim 3, wherein the meteorological data comprises the three-dimensional meteorological data and two-dimensional meteorological data; and
   the performing inference based on the meteorological data by using the plurality of first AI models comprises:

   coupling the three-dimensional meteorological data with the two-dimensional meteorological data, to obtain fused meteorological data; and
   performing inference based on the fused meteorological data by using the plurality of first AI models.

5. The method according to any one of claims 1 to 4, wherein the performing inference based on the meteorological data by using the plurality of first AI models comprises:
   in a process of performing inference based on the meteorological data by using the plurality of first AI models, adding biases to computation results of intermediate variables in the plurality of first AI models or computation results of attention mechanisms in the plurality of first AI models, wherein the bias is determined based on altitude information or latitude information in the meteorological data.

6. The method according to any one of claims 1 to 5, wherein the method further comprises:

   determining a plurality of second AI models from the model library based on the target time, wherein different second AI models in the plurality of second AI models are used for forecasting weather at different time intervals; and
   performing inference based on the meteorological data by using the plurality of second AI models, to obtain a second weather forecast result at the target time, wherein each of the second AI models is used for performing at least one iterative inference operation.

7. The method according to claim 6, wherein the method further comprises:

   determining a target weather forecast result based on the first weather forecast result and the second weather forecast result; and
   outputting the target weather forecast result.

8. The method according to any one of claims 1 to 7, wherein the method further comprises:

   obtaining location information, wherein the first weather forecast result indicates weather corresponding to the location information; and
   the determining a plurality of first artificial intelligence AI models from a model library based on the target time comprises:
   determining the plurality of first artificial intelligence AI models from the model library based on the location information and the target time.

9. The method according to any one of claims 1 to 8, wherein the obtaining target time comprises:

   outputting an interaction interface; and

in response to an operation by a user on the interaction interface, obtaining the target time input by the user.

10. A weather forecast apparatus, wherein the apparatus comprises:

a data obtaining module, configured to obtain meteorological data and target time;
a model determining module, configured to determine a plurality of first artificial intelligence AI models from a model library based on the target time, wherein different first AI models in the plurality of first AI models are used for forecasting weather at different time intervals; and
an inference module, configured to perform inference based on the meteorological data by using the plurality of first AI models, to obtain a first weather forecast result at the target time, wherein each of the first AI models is used for performing at least one iterative inference operation.

11. The apparatus according to claim 10, wherein the model determining module is configured to determine, from the model library based on the target time, the plurality of first artificial intelligence AI models and a quantity of iterative inference operations performed by using each of the plurality of first AI models; and
the inference module is configured to sequentially perform, based on the meteorological data and the quantity of iterative inference operations performed by using each of the first AI models, the iterative inference operations by using the plurality of first AI models.

12. The apparatus according to claim 10 or 11, wherein the meteorological data comprises three-dimensional meteorological data.

13. The apparatus according to claim 12, wherein the meteorological data comprises the three-dimensional meteorological data and two-dimensional meteorological data; and
the inference module is configured to:

couple the three-dimensional meteorological data with the two-dimensional meteorological data, to obtain fused meteorological data; and
perform inference based on the fused meteorological data by using the plurality of first AI models.

14. The apparatus according to any one of claims 10 to 13, wherein the inference module is configured to: in a process of performing inference based on the meteorological data by using the plurality of first AI models, add biases to computation results of intermediate variables in the plurality of first AI models or computation results of attention mechanisms in the plurality of first AI models, wherein the bias is determined based on altitude information or latitude information in the meteorological data.

15. The apparatus according to any one of claims 10 to 14, wherein the model determining module is further configured to determine a plurality of second AI models from the model library based on the target time, wherein different second AI models in the plurality of second AI models are used for forecasting weather at different time intervals; and
the inference module is further configured to perform inference based on the meteorological data by using the plurality of second AI models, to obtain a second weather forecast result at the target time, wherein each of the second AI models is used for performing at least one iterative inference operation.

16. The apparatus according to claim 15, wherein the inference module is further configured to:

determine a target weather forecast result based on the first weather forecast result and the second weather forecast result; and
output the target weather forecast result.

17. The apparatus according to any one of claims 10 to 16, wherein

the data obtaining module is further configured to obtain location information, wherein the first weather forecast result indicates weather corresponding to the location information; and
the model determining module is configured to determine the plurality of first artificial intelligence AI models from the model library based on the location information and the target time.

18. The apparatus according to any one of claims 10 to 17, wherein the data obtaining module is configured to:

output an interaction interface; and
in response to an operation by a user on the interaction interface, obtain the target time input by the user.

19. A computing device cluster, comprising at least one computing device, wherein each computing device comprises a processor and a memory; and
the processor is configured to execute instructions stored in the memory, to cause the computing device cluster to perform the method according to any one of claims 1 to 9.

16

**20.** A computer-readable storage medium, wherein the computer-readable storage medium stores instructions; and when the instructions are run on at least one computing device, the at least one computing device is caused to perform the method according to any one of claims 1 to 9.

**21.** A computer program product comprising instructions, wherein when the computer program product runs on at least one computing device, the at least one computing device is caused to perform the method according to any one of claims 1 to 9.

FIG. 1

FIG. 2

Data obtaining
module 101

Model
determining
module 102

Inference
module 103

User
input

S301: Obtain target time and
meteorological data

Target time

Meteorological data

S302: Determine a plurality of
AI models from a model library
based on the target time, where
different AI models are used
for forecasting weather at
different time intervals

Plurality of AI models

S303: Perform inference
based on the meteorological
data by using the plurality of
AI models, to obtain a
weather forecast result at the
target time, where each of
the AI models is used for
performing at least one
iterative inference operation

FIG. 3

FIG. 4

FIG. 5

**Computing device 600**

Processor
610

Communication
interface
630

Bus 640

Program code

Data

Memory 620

FIG. 6

FIG. 7

EP 4 603 879 A1

## INTERNATIONAL SEARCH REPORT

| International application No. |
| --- |
| **PCT/CN2023/100686** |

**A.    CLASSIFICATION OF SUBJECT MATTER**

G01W1/10(2006.01)i;  G06N 3/0464(2023.01)i;  G06N 3/08(2023.01)i

According to International Patent Classification (IPC) or to both national classification and IPC

**B.    FIELDS SEARCHED**

Minimum documentation searched (classification system followed by classification symbols)

IPC:  G01W, G06N3

Documentation searched other than minimum documentation to the extent that such documents are included in the fields searched

Electronic data base consulted during the international search (name of data base and, where practicable, search terms used)

CNABS, CNTXT, CNKI: 人工智能, 模型, 多, 不同, 各, 时段, 时刻, 间隔, 气候, 气象, 雨, 雷, 风, 机器学习, 神经网络, 训练, 预测, 预报 VEN, USTXT, EPTXT, WOTXT, ISA: AI, artificial, intelligence, model, mode, several, multi, different, various, time, moment, interval, weather, rain, thunder, wind, storm, machine learn, neural network, train, predict, forecast

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 115587650 A (CECEP TALROAD TECHNOLOGY CO., LTD.) 10 January 2023 (2023-01-10)<br>          description, and paragraphs 34-86, and figure 1 | 1-21 |
| A | CN 115016040 A (GUANGDONG METEOROLOGICAL PUBLIC SERVICE CENTER (GUANGDONG METEOROLOGICAL FILM AND TELEVISION PROPAGANDA CENTER)) 06 September 2022 (2022-09-06)<br>          description, paragraphs 15-117, and figures 1-8 | 1-21 |
| A | CN 111856618 A (SHANGHAI EYE CONTROL TECHNOLOGY CO., LTD.) 30 October 2020 (2020-10-30)<br>          description, paragraphs 39-51 and 68-72, and figures 1-2 | 1-21 |
| A | CN 115097548 A (GUANGDONG METEOROLOGICAL PUBLIC SERVICE CENTER (GUANGDONG METEOROLOGICAL FILM AND TELEVISION PROPAGANDA CENTER)) 23 September 2022 (2022-09-23)<br>          entire document | 1-21 |

☑ Further documents are listed in the continuation of Box C.        ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **07 September 2023** | **18 September 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**EP 4 603 879 A1**

**INTERNATIONAL SEARCH REPORT**

| International application No. |
|---|
| **PCT/CN2023/100686** |

**C.    DOCUMENTS CONSIDERED TO BE RELEVANT**

| Category* | Citation of document, with indication, where appropriate, of the relevant passages | Relevant to claim No. |
|---|---|---|
| A | JP 2008134145 A (TOSHIBA CORP.) 12 June 2008 (2008-06-12)<br>    entire document | 1-21 |
| A | KR 20220095624 A (STUDIO X KO INC.) 07 July 2022 (2022-07-07)<br>    entire document | 1-21 |
| A | 孙健等 (SUN, Jian et al.). "人工智能与物联网在大气科学领域中的应用 (Application of Artificial Intelligence and Internet of Things in Atmospheric Science)"<br>应用气象学报 (Journal of Applied Meteorological Science),<br>Vol. 32, No. 1, 31 January 2021 (2021-01-31), pages 1-11<br>ISSN: 1001-7313,<br>    thesis, section 1-5 | 1-21 |
| A | TAN, W. Y. et al. "State-of-the-Art Development of Two-Waves Artificial Intelligence Modeling Techniques for River Streamflow Forecasting"<br>Archives of Computational Methods in Engineering, 11 June 2022 (2022-06-11), pages 5185-5211<br>ISSN: 1134-3060,<br>    thesis, section 1-6 | 1-21 |

Form PCT/ISA/210 (second sheet) (July 2022)

EP 4 603 879 A1

INTERNATIONAL SEARCH REPORT
Information on patent family members

International application No.

**PCT/CN2023/100686**

| Patent document cited in search report | | | Publication date (day/month/year) | Patent family member(s) | | | Publication date (day/month/year) |
|---|---|---|---|---|---|---|---|
| CN | 115587650 | A | 10 January 2023 | None | | | |
| CN | 115016040 | A | 06 September 2022 | CN | 115016040 | B | 22 November 2022 |
| CN | 111856618 | A | 30 October 2020 | None | | | |
| CN | 115097548 | A | 23 September 2022 | CN | 115097548 | B | 07 April 2023 |
| JP | 2008134145 | A | 12 June 2008 | JP | 4818079 | B2 | 16 November 2011 |
| KR | 20220095624 | A | 07 July 2022 | KR | 102432397 | B1 | 12 August 2022 |

Form PCT/ISA/210 (patent family annex) (July 2022)

REFERENCES CITED IN THE DESCRIPTION

**Patent documents cited in the description**

- CN 202211351491